# EUROPEAN PATENT APPLICATION

(11) **EP 3 400 987 A1**
(43) Date of publication of application: **14.11.2018**
(21) Application number: 18171366.0
(22) Date of filing: 08.05.2018
(51) Int. Cl.: A62C 2/10, E06B 9/24, B32B 15/00, D06M 17/00

(54) **SUBSTANTIALLY LIGHT-IMPERVIOUS TEXTILE PRODUCT AND METHOD FOR FORMING THEREOF**

(30) Priority: 08.05.2017 NL 2018867
(71) Applicant: Turion Holding B.V., 7574 PG Oldenzaal (NL)
(72) Inventor: SMITH, Menze Ite, 7574 PG Oldenzaal (NL)
(74) Representative: Bartelds, Erik

(57) **Abstract**

The application relates to a substantially light-impervious textile product (1), comprising at least one layer of textile material (2), wherein the textile product is fire-resistant.

The application further describes a method for forming a substantially light-impervious textile product (1), comprising the steps of providing at least one layer of textile material, and making (step 30) substantially light-impervious a product formed from the textile material, and the step (40) of making fire-resistant the product formed from the textile material.

## Description

The invention relates to a substantially light-impervious textile product comprising at least one layer of textile material. Such a product is known and is for instance applied as sun protection, as curtain or as substrate for printing. Such a textile product must satisfy a wide range of often contradictory requirements. The product must thus be simple to manufacture at a reasonable cost, must be easy to handle and process and must in addition combine the appearance and the feel of textile with excellent imperviousness to light. If the product is going to be utilized for decorative purposes, it must further be suitable for printing, dyeing or colouring in other manner. When such textile products are used by consumers or applied in public spaces, they must in addition comply with all manner of additional requirements, particularly in the field of safety.

For imperviousness to light a distinction is made between dim-out (semi-lightproof), block-out (substantially lightproof) and black-out (completely lightproof when tested with for instance a light source of 100,000 lux such as sunlight). Dim-out can be achieved with a multilayer textile product while in order to achieve block-out or black-out extra layers with another structure, for instance films and/or coatings, are usually necessary in addition to the textile material. The present invention relates to textile products in all three of these classes of light-imperviousness, but with the emphasis on block-out and black-out.

The invention now has for its object to provide a substantially light-impervious textile product of the above described type which is suitable for sale on the consumer market and/or for application in public spaces where safety is an important aspect. According to the invention this is achieved in the case of such a textile product in that the textile product is fire-resistant. Because it is given fire-resistant form, the product is suitable for the stated applications.

A distinction is made between different classes of fire resistance. The German standard DIN 4102, the French standard NF P 92 503-505 or the British standard BS 5867 are usually used in Europe. A distinction is made between classes B1 and B2 in the German standard and between M1 and M2 in the French standard. Although the test methods and the assessment of the results differ somewhat, materials which satisfy the German B1 standard will usually also satisfy the French M1 standard, and vice versa. The invention has for its object to achieve fire resistance at the B1 or M1 level.

In a first embodiment of the textile product the at least one layer of textile material can itself be fire-resistant. The textile material can then also be so dense that it is substantially impervious to light. A possible material for the textile is then for instance Trevira CS from Trevira GmbH (www.trevira.com).

In another embodiment the textile product according to the invention can be provided with at least one substantially light-impervious darkening layer connected to the at least one layer of textile material.

The textile product preferably has in this case at least two layers of textile material between which the at least one darkening layer is received. These at least two layers of textile material can here form the outer sides of the textile product. This gives a significant advantage for further processing, particularly for printing or dyeing of the textile product, since the textile material is easily printed or dyed, in contrast to the material of the darkening layer.

The at least one darkening layer can here advantageously be fire-resistant. A fire-resistant product can thus still be obtained on the basis of a normal textile material. It is simpler in general to make the darkening layer fire-resistant than it is the textile layer or layers.

In an embodiment of the textile product the at least one layer of textile material and/or the at least one darkening layer can be manufactured at least partially from an inherently fire-resistant material. There is then no need for further treatment of the textile layer(s) and/or darkening layer(s) for the purpose of making them fire-resistant.

It is on the other hand also possible to envisage the at least one layer of textile material and/or the at least one darkening layer being covered with a fire-resistant material. The textile material and/or the material of the darkening layer can in that case be freely chosen.

The fire-resistant material can here comprise at least one additive or compound which can be chosen from the group consisting of minerals, organic halogen compounds and organic phosphorus compounds. Diverse materials can be made fire-resistant with such additives. The organic compounds are preferably antimony-free.

A textile product which is strong and simple to manufacture is obtained when the darkening layer comprises a film, in particular a polyester film, a TPE/PU film or an aluminium foil. Such a film is easy to combine with the layer(s) of textile material.

It is on the other hand also possible to envisage the darkening layer comprising a substantially light-impervious coating(s), particularly a pigment coating such as for instance a titanium dioxide coating. Such a coating can be applied in powder form or as a paste.

In order to guarantee the look and feel of a normal textile product the at least one layer of textile material, which can form the outer side of the product, can be a woven fabric, a knit or a non-woven. When the fire-resistant properties are provided by the darkening layer, any random material can, as stated, be chosen for the textile layer(s) depending on the intended application. Possible materials are natural materials such as cotton and synthetic materials such as polyester, elastane and many others.

The invention also relates to a method for forming a substantially light-impervious textile product. A conventional method already comprises the steps of:
providing at least one layer of textile material, and
making substantially light-impervious a product formed from the textile material.

The method according to the invention is now distinguished from the known method by the step of making fire-resistant the product formed from the textile material.

A textile product with a good cohesion and sufficient strength is obtained when a darkening layer is laminated onto the at least one layer of textile material. This laminating can take place at temperatures of between 80 and 210°C, preferably between 120 and 165°C.

The at least one layer of textile material and/or the at least one darkening layer can further be covered with a fire-resistant material before or after the layers are connected to each other.

The fire-resistant material can be supplied here in liquid form and can be applied to the at least one layer of textile material and/or the at least one darkening layer by immersion, spraying or using a doctor blade.

Other preferably applied variants of the method form the subject-matter of the dependent claims 9-13 and 15.

The invention thus provides a fire-resistant or flame-retardant embodiment of a textile product by making fire-resistant one or more components or layers (in the extreme case, for instance in the case of very heavy and thick textile products, even all the layers) of the product, or by making the textile product as a whole fire-resistant, so after it has been assembled from the different layers. The individual layers can here be made fire-resistant before or after they are assembled. When the layers are made fire-resistant before assembly, this can take place by manufacturing the layers from an inherently fire-resistant material or by coating them with a fire-resistant material after manufacture. The choice of making only one or more layers or, conversely, the whole product fire-resistant depends on different technical considerations, including the question of how the different layers or the product must be processed during printing, dyeing (colouring) and/or making up of the material.

The invention will now be elucidated on the basis of two embodiments, wherein reference is made to the accompanying drawing, in which:
Fig. 1 is a schematic cross-sectional view which shows the construction of a substantially light-impervious textile product according to a first embodiment of the invention,
Fig. 2 is a view corresponding to Fig. 1 of a second embodiment,
Fig. 3 shows an installation for the manufacture of the textile product of Fig. 1 and 2,
Fig. 4 shows schematically a first method for manufacturing a light-impervious textile product according to the invention,
Fig. 5 shows schematically an alternative to the method of Fig. 4, and
Fig. 6 is a view corresponding to Fig. 1 and 2 of an embodiment with a single layer of textile material.

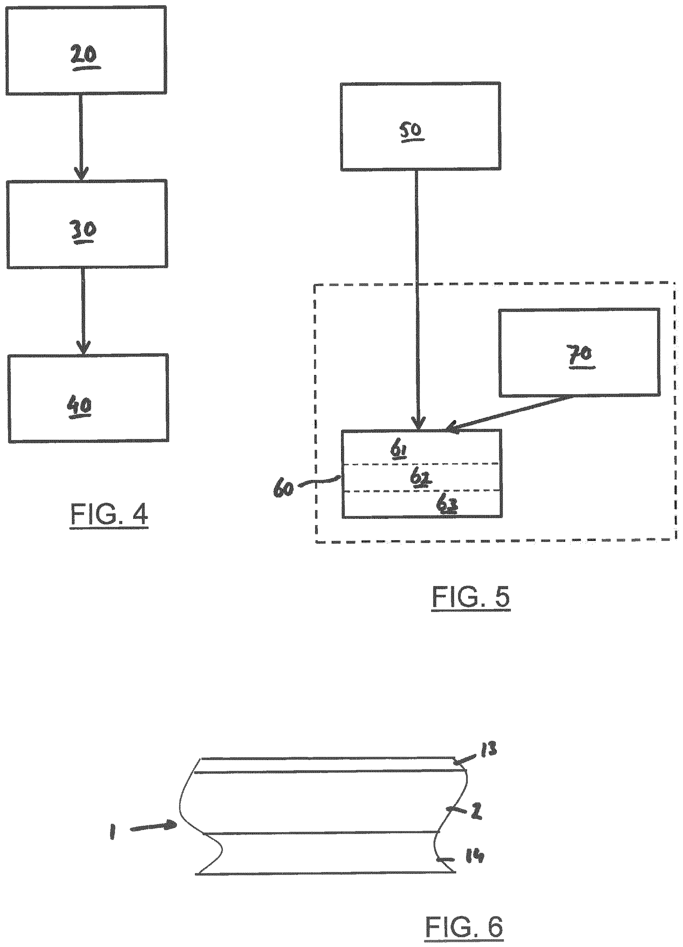

A method for forming a substantially light-impervious textile product 1 comprises three main steps according to the invention. First a layer of textile material 2 is provided (Fig. 4, step 20) from which a textile product can be formed. In the shown example the product 1 formed from textile material 2 is then made substantially light-impervious (step 30) and the light-impervious textile product is subsequently made fire or flame-resistant (step 40).

These steps can also be performed in a different sequence or even partly simultaneously. Fig. 5 thus shows that a multilayer textile product is formed by connecting in a step 60 a darkening layer 4 to a layer of textile material 2 which is supplied in a step 50. This product is thus also made light-impervious here simultaneously with forming of textile product 1 by adding darkening layer 4, so that step 60 therefore in fact comprises two sub-steps (forming 61, making impervious 62). When darkening layer 4 is moreover manufactured from a fire-resistant material or treated with a fire-resistant material (in step 70), textile product 1 is simultaneously made fire-resistant (sub-step 63) in the combined step 60 of forming and making lightproof.

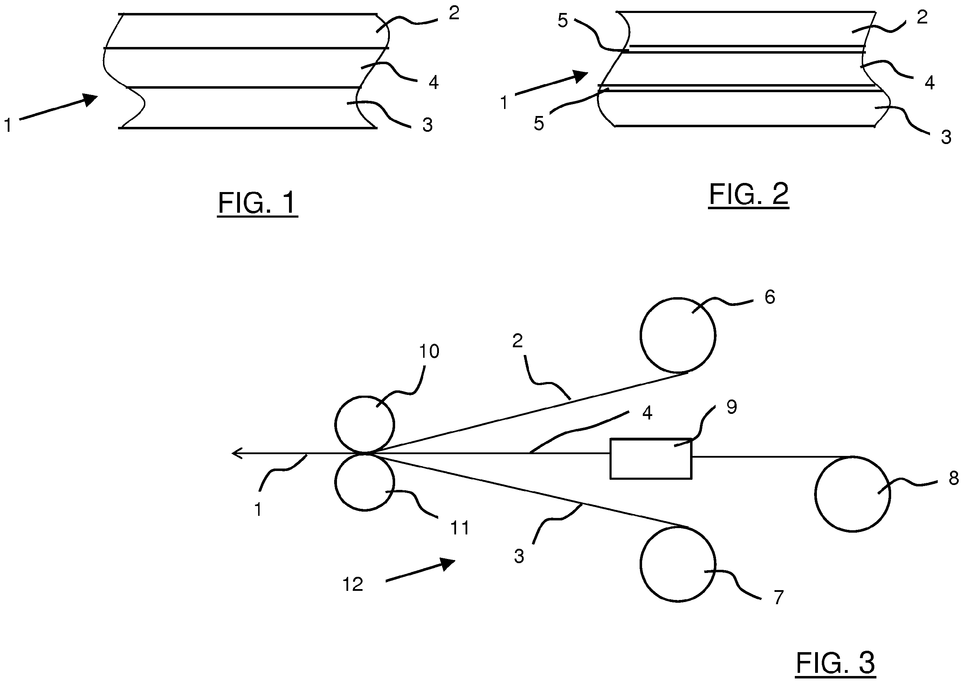

An example of a substantially light-impervious textile product 1 according to a first embodiment of the invention, which is formed by the method of Fig. 4 or Fig. 5, is shown in Fig. 1. This is a multilayer textile product 1 which comprises a first layer of textile material 2 and a second layer of textile material 3 as well as a darkening layer 4 which is arranged therebetween and is substantially light-impervious. Darkening layer 4 can be formed by a plastic film which can be connected to the first and second layer of textile material 2, 3 by lamination. In the shown embodiment darkening layer 4 is fire-resistant.

The plastic material of the darkening film is made fire-resistant for this purpose by one or more fire-resistant additives or compounds mixed with the plastic before the light-impervious darkening film is formed therefrom. Suitable additives or compounds are for instance minerals, organic halogen compounds and organic phosphorus compounds. A suitable material is for instance AboFlame from Bodewes Material Solutions (www.materialsolutions.nl), a phosphorus-based flame-retardant which is non-toxic and antimony-free. Another suitable material is deca-DBE, thus preferably without antimony.

The plastic material of darkening layer 4 can comprise polyester, but it is also possible to envisage the plastic material of darkening layer 4 comprising a combination of a thermoplastic elastomer and polyurethane. Suitable plastic films for the darkening layer are for instance Faitex, Faitgom or Easytex, marketed by Fait Plast SpA (www.faitplast.com). Similar films are also supplied by Covestro (formerly Bayer MaterialScience - www.covestro.com) and Protechnic (www.protechnic.fr).

The textile materials of the first and second layer 2, 3 can be chosen at random depending on the application of the textile product. The first and second layer of textile material 2, 3 can be the same or different. A woven fabric, a knit or a non-woven can be applied as textile material. Both natural and synthetic fibres can be incorporated here into the woven fabric, the knit or the non-woven. When the textile product is used as substrate for printing, fibres with a neutral colour, which retain printing ink well, will be chosen.

Although in the shown embodiment only a single layer of textile material 2, 3 is arranged on either side of plastic darkening layer 4, a plurality of textile layers can in practice be arranged on each side of the darkening layer. Besides plastic darkening layer 4, other functional layers can in addition be received between textile layers 2, 3 to the extent that they are compatible with darkening layer 4 and can be connected by means of lamination to darkening layer 4 and textile layers 2, 3. The ratio of the thicknesses of the various layers 2, 3, 4 is indicated only schematically here and can vary in practice.

Instead of by admixing fire-resistant additives, it is also possible to envisage making the plastic material of darkening layer 4 fire-resistant in other manner, for instance by applying one or more fire-resistant agents thereto. The plastic film which will form darkening layer 4 can for instance be immersed in or sprayed with one or more fire-resistant agents. These fire-resistant agents then form fire-resistant layers 5 on both surfaces of darkening layer 4, as shown in Fig. 2. The same materials can be applied here as described above in respect of the embodiment of Fig. 1.

The textile material itself can be made fire-resistant instead of or in addition to a fire-resistant darkening layer 4. A coating 13 of a fire-resistant or flame-retardant material can for instance be arranged on a layer of textile material 2 for this purpose (Fig. 6). A coating can likewise be used instead of a film to make the textile product light-impervious. This coating 14, which in the shown example is arranged on the other side of textile layer 2 to fire-resistant coating 13, can for instance comprise a pigment such as titanium dioxide. Coating 14 can also comprise an acrylate. Lightproof coating 14 can be applied in the form of a powder or paste. Other materials which can be applied to textile layer 2 for the purpose of making textile product 1 light-impervious are for instance polyurethane or polyester. Light-impervious coating 14 is finally fixed to textile layer 2 by laminating/using a doctor blade at relatively high temperature, for instance in the order of 110 to 210°C. An adhesive layer can optionally be further arranged between the layer of textile material 2 and light-impervious coating 14. It is also possible to envisage applying a light-impervious polyester or polyurethane film as adhesive and melting layer, wherein the coating can fulfil a different role.

Multilayer textile product 1 can be formed by a first layer of textile material 2 to be supplied from a supply roll 6 (Fig. 3) and the second layer of textile material 3 to be supplied from a supply roll 7. Layer 4 of the light-impervious darkening material can further be supplied from a supply roll 8. The three supplied layers 2, 3, 4 can be fed between two heated, rotating pressure rollers 10, 11, wherein the first and second layer of textile material 2, 3 are situated on either side of the layer of darkening material 4. The plastic material of darkening layer 4 will become soft due to the high temperature of rollers 10, 11 and adhere to the textile material of the first and second layer 2, 3, whereby a laminated textile product 1 is obtained. When the textile material of first layer 2 and/or second layer 3 comprises synthetic fibres, these synthetic fibres can also become soft to some extent due to the high temperature of rollers 10, 11 and likewise play a part in the adhesion during the laminating process.

The speeds at which the different starting materials are supplied and laminated depend on the properties and layer thicknesses of the materials used. Production speeds between 0.5 m/min and 120 m/min can be envisaged. Production speeds between 25 m/min and 60 m/min will in practice be chosen when fire resistance and/or light-imperviousness are achieved by coating, spraying or immersion in a liquid, while production speeds in the order of 4 m/min to 14 m/min can be achieved in the case of lamination with a film. The materials must in any case be held under sufficient tension through a suitable choice of the rotation speeds of the different rolls 6-8, 10, 11 in order to prevent creasing and surface slackness. The materials must also be held under tension in a direction transversely of the direction of movement.

In the shown example the plastic film of darkening layer 4 runs past a station 9 where the plastic material of darkening layer 4 is made fire-resistant before being guided between heated rollers 10, 11. This station 9 can comprise a bath with liquid fire-resistant material or can comprise sprayers placed on either side of film strip 4. Infrared radiators or hot air blowers or a combination of hot air and infrared radiators (not shown here) can be arranged on one or either side of the strip for drying the applied fire-resistant layers. The strip can also be fed through a heated space while use can also be made of the heat of rollers 10, 11 for drying. The final multilayer textile product 1 formed after passing through heated pressing rollers 10, 11 will in this embodiment thus take the form as shown in Fig. 2.

It is on the other hand also possible to envisage station 9 being placed downstream of rollers 10, 11, wherein the fire-resistant material then penetrates textile layers 2, 3 and forms a connection with the plastic film of darkening layer 4. A multilayer textile product 1 as shown in Fig. 2 is then also created. It is however also possible of course to envisage the plastic film supplied on roll 8 being already provided with fire-resistant agents in the form of additives which are admixed with the starting material. Station 9 is in that case omitted and the end product has the form as shown in Fig. 1.

When textile layers 2, 3 already take a light-impervious and/or flame-retardant form per se, there is no need for a film and/or coating as darkening layer, and roll 8 and station 9 can be omitted. It is on the other hand possible to envisage producing a woven fabric, a knit or a non-woven such that an inner layer is also produced between the outer layers (co-woven, co-knitted or co-reinforced) which is already light-impervious. In this case the thus formed end product can finally be fed through a bath or a spray installation device in order to acquire the fire-resistant properties. In this latter method a thread which is not flammable can in addition be used for the woven fabric, the knit or the non-woven, whereby the finishing treatment is wholly omitted. The choices depend on the intended use or the intended further processing of the textile product.

The invention thus makes it possible with relatively simple means to form a textile product which on the one hand is impervious to light, and so can function as darkening material or substrate for instance for printing work, and which in addition is fire-resistant. Such a textile product can be applied without problem in public spaces and is suitable for use by consumers.

Although the invention is elucidated above with reference to a number of embodiments, it will be apparent that it is not limited thereto but can be modified in many ways within the scope of the following claims.

## Claims

1. Substantially light-impervious textile product, comprising at least one layer of textile material, **characterized in that** the textile product is fire-resistant.

2. Textile product as claimed in claim 1, **characterized in that** the at least one layer of textile material is fire-resistant.

3. Textile product as claimed in claim 1 or 2, **characterized by** at least two layers of textile material between which at least one substantially light-impervious darkening layer is received.

4. Textile product as claimed in claim 3, **characterized in that** the at least one darkening layer is fire-resistant.

5. Textile product as claimed in any of the claims 2-4, **characterized in that** the at least one layer of textile material and/or the at least one darkening layer is manufactured at least partially from an inherently fire-resistant material or is covered with a fire-resistant material,
optionally wherein the fire-resistant material comprises at least one additive or compound chosen from the group consisting of minerals, organic halogen compounds and organic phosphorus compounds.

6. Textile product as claimed in any of the claims 3-5, **characterized in that** the darkening layer:
comprises a film, in particular a polyester film, a TPE/PU film or an aluminium foil, or
comprises a substantially light-impervious coating, particularly a pigment coating such as a titanium dioxide coating.

7. Textile product as claimed in any of the foregoing claims, **characterized in that** the at least one layer of textile material is a woven fabric, a knit or a non-woven.

8. Method for forming a substantially light-impervious textile product, comprising the steps of:
- providing at least one layer of textile material, and
- making substantially light-impervious a product formed from the textile material, **characterized by** the step of:
- making fire-resistant the product formed from the textile material.

9. Method as claimed in claim 8, **characterized in that** the step of making the product fire-resistant comprises of making the at least one layer of textile material fire-resistant.

10. Method as claimed in claim 8 or 9, **characterized in that** the step of making the product substantially light-impervious comprises of providing at least two layers of textile material and arranging a substantially light-impervious darkening layer between the at least two layers of textile material.

11. Method as claimed in claim 10, **characterized in that** the at least one darkening layer comprises a film or a substantially light-impervious coating.

12. Method as claimed in claim 10 or 11, **characterized in that**:
the at least one darkening layer is laminated onto the at least one layer of textile material, and/or
the at least one darkening layer is made fire-resistant.

13. Method as claimed in any of the claims 10-12, **characterized in that** the at least one layer of textile material and/or the at least one darkening layer is manufactured at least partially from an inherently fire-resistant material or is covered with a fire-resistant material.

14. Method as claimed in claims 10 and 13, **characterized in that** the at least one layer of textile material and/or the at least one darkening layer is covered with a fire-resistant material before or after the layers are connected to each other,
optionally wherein the fire-resistant material is supplied in liquid form and applied to the at least one layer of textile material and/or the at least one darkening layer by immersion, spraying or using a doctor blade.

15. Method as claimed in any of the claims 8-14, **characterized in that** the at least one layer of textile material is formed by weaving, knitting or needle-punching.
